# EUROPÄISCHE PATENTSCHRIFT

(11) **EP 2 056 104 B1**
(45) Veröffentlichungstag und Bekanntmachung des Hinweises auf die Patenterteilung: **27.12.2017**
(21) Anmeldenummer: 08167754.4
(22) Anmeldetag: 28.10.2008
(51) Int. Cl.: G01N 27/90

(54) **Verfahren zum Bestimmen geometrischer Eigenschaften einer Anomalie in einem Werkstück sowie Messvorrichtung zur Durchführung des Verfahrens**
Method for determining geometrical characteristics of an anomaly in a test object and measuring apparatus for carrying out the method
Procédé pour déterminer les propriétés géometriques d'une irrégularité dans une pièce et appareil correspondant

(30) Priorität: 29.10.2007 CH 16792007
(43) Veröffentlichungstag der Anmeldung: 06.05.2009
(73) Patentinhaber: General Electric Technology GmbH, 5400 Baden (CH)
(72) Erfinder: Moser, Roland Richard, 8005, Zürich (CH); Revaz, Bernard, 1205, Genf (CH); Reymond, Serge, 1205, Genf (CH); Kejik, Pavel, 1024, Ecublens (CH); Popovic, Radivoje, 1025, St-Sulpice (CH)
(74) Vertreter: General Electric Technology GmbH

(56) Entgegenhaltungen:
- US-B1- 6 504 363
- SOPHIAN ET AL: "Pulsed magnetic flux leakage techniques for crack detection and characterisation" SENSORS AND ACTUATORS A, ELSEVIER SEQUOIA S.A., LAUSANNE, CH, Bd. 125, Nr. 2, 10. Januar 2006 (2006-01-10), Seiten 186-191, XP005221303 ISSN: 0924-4247
- SISIRA K GAMAGE ET AL: "A study on a silicon Hall effect device with an integrated electroplated planar coil for magnetic sensing applications; A study on a silicon Hall effect device with an integrated electroplated planar coil" JOURNAL OF MICROMECHANICS & MICROENGINEERING, INSTITUTE OF PHYSICS PUBLISHING, BRISTOL, GB, Bd. 16, Nr. 3, 1. März 2006 (2006-03-01), Seiten 487-492, XP020104931 ISSN: 0960-1317
- SADEGHI S H H ET AL: "SURFACE POTENTIAL DISTRIBUTIONS DUE TO EDDY CURRENTS AROUND LONG CRACKS IN METALS, INDUCED BY U-SHAPED CURRENT-CARRYING WIRES" IEEE TRANSACTIONS ON MAGNETICS, IEEE SERVICE CENTER, NEW YORK, NY, US, Bd. 27, Nr. 1, Januar 1991 (1991-01), Seiten 674-679, XP000246986 ISSN: 0018-9464
- SADEGHI S H H ET AL: "On the suitability of induction coils for crack detection and sizing in metals by the surface magnetic field measurement technique" NDT & E INTERNATIONAL, BUTTERWORTH-HEINEMANN, OXFORD,, GB, Bd. 34, Nr. 7, Oktober 2001 (2001-10), Seiten 493-504, XP004250353 ISSN: 0963-8695
- POPOVIC R S: "Sensor microsystems" MICROELECTRONICS, 1995. PROCEEDINGS., 1995 20TH INTERNATIONAL CONFERENCE ON NIS, SERBIA 12-14 SEPT. 1995, NEW YORK, NY, USA,IEEE, US, Bd. 2, 12. September 1995 (1995-09-12), Seiten 531-537, XP010161737 ISBN: 0-7803-2786-1
- DOVER W D ET AL: "The Use of A-C Field Measurements to Determine the Shape and Size of a Crack in a Metal" EDDY-CURRENT CHARACTERIZATION OF MATERIALS AND STRUCTURES, XX, XX, 1981, Seiten 401-427, XP009095690
- MINKOV D ET AL: "Method for sizing of 3-D surface breaking flaws by leakage flux" NDT & E INTERNATIONAL, BUTTERWORTH-HEINEMANN, OXFORD,, GB, Bd. 31, Nr. 5, Oktober 1998 (1998-10), Seiten 317-324, XP004292591 ISSN: 0963-8695
- R. S. POPOVIC: "Hall devics for Magnetic sensor Microsystems" IEEE TRANSDUCERS 1997, 16. Juni 1997 (1997-06-16), - 19. Juni 1997 (1997-06-19) Seiten 377-380, XP002468151
- TEODOR DOGARU ET AL: "Giant Magnetoresistance-Based Eddy-Current Sensor", IEEE TRANSACTIONS ON MAGNETICS, IEEE SERVICE CENTER, NEW YORK, NY, US, vol. 37, no. 5, 1 September 2001 (2001-09-01), XP011033959, ISSN: 0018-9464

## Beschreibung

### TECHNISCHES GEBIET

Die vorliegende Erfindung bezieht sich auf das Gebiet der zerstörungsfreien Werkstückprüfung. Sie betrifft ein Verfahren zum Bestimmen geometrischer Eigenschaften einer Anomalie in einem Werkstück gemäss dem Oberbegriff des Anspruchs 1 sowie eine Messvorrichtung zur Durchführung des Verfahrens.

### STAND DER TECHNIK

Der Anmelderin ist bekannt, dass das Maximum der in der Oberflächen-Ebene liegenden Quadratur(out-of-phase)-Komponente der Riss-bedingten Magnetfeld-Anomalie (*B*_{*y,*0}^{"}(*ω*)) im magnetischen Wechselfeld eines von der Oberfläche eines elektrisch leitenden Werkstücks in die Tiefe reichenden Risses nützliche Informationen im Bezug auf die Geometrie des Risses enthält. Der Vorteil eines solchen Vorgehens liegt darin, dass die gemessene Magnetfeldgrösse in erster Linie von der Risstiefe abhängt und nicht vom Rissvolumen, wie dies beispielsweise für ein statisches Magnetfeld der Fall ist. Nachteilig ist hierbei jedoch, dass die Risstiefe nicht ohne die zusätzliche Kenntnis der Skintiefe und der magnetischen Permeabilität im Werkstück zum gemessenen *B*_{*y*,0}^{"}max(*ω*) in Beziehung gesetzt werden kann.

Aus dem Artikel von Sadeghi S H H et al. "On the suitability of induction coils for crack detection and sizing im metals by the surface magnetic field measurement technique", NDT & E International, Butterworth-Heinemann, Oxford, GB, Bd. 34, Nr. 7, S.493-504, Oktober 2001, ist eine gepulste MFL(Magnetic Flux Leakage)-Technik für magnetisierbare Materialien bekannt, bei der die Impulsantwort auf einen Magnetisierungsimpuls in der Nähe eines Risses gemessen und zur Charakterisierung des Risses herangezogen wird. Die Messungen sind allerdings auf magnetisierbare Materialen beschränkt.

### DARSTELLUNG DER ERFINDUNG

Es ist daher Aufgabe der Erfindung, ein Verfahren und eine Vorrichtung anzugeben, mit denen die geometrischen Eigenschaften einer Anomalie, insbesondere die Risstiefe eines Risses, in einem elektrisch leitenden, insbesondere metallischen Werkstück ohne zusätzliche Kenntnisse über das Werkstück bestimmt werden können.

Die Aufgabe wird durch die Gesamtheit der Merkmale der Ansprüche 1 und 10 gelöst. Wesentlich für die Erfindung ist, dass im Bereich der Anomalie in dem Werkstück Wirbelströme angeregt werden, und dass das von den angeregten Wirbelströmen erzeugte Magnetfeld in der Umgebung der Anomalie abgetastet und ausschliesslich aus der Verteilung des Magnetfeldes auf die geometrischen Eigenschaften der Anomalie geschlossen wird. Erfindungsgemäss wird ausgehend von dem Riss, der erste Nulldurchgang der in der Ebene der Oberfläche und quer zur Längsrichtung des Risses liegenden Quadratur-Komponente des Magnetfeldes bestimmt und aus dem ersten Nulldurchgang die maximale Stromschichtbreite der mit dem Riss verknüpften Stromschichten der Wirbelströme ermittelt, und aus der ermittelten maximalen Stromschichtbreite auf die Risstiefe des zugehörigen Risses geschlossen.
Eine Ausgestaltung des Verfahrens nach der Erfindung ist dadurch gekennzeichnet, dass Anomalien in Form von Rissen im Werkstück untersucht werden, dass als geometrische Eigenschaft der Risse die Risstiefe bestimmt wird, dass in einem ersten Schritt die Lage des Risses auf der Oberfläche des Werkstücks bestimmt wird, und dass in einem zweiten Schritt die Verteilung des Magnetfeldes quer zur Längsrichtung des Risses abgetastet und ausgewertet wird, wobei die Wirbelströme im Bereich des Risses durch Anlegen eines magnetischen Wechselfeldes angeregt werden, und die in der Ebene der Oberfläche und quer zur Längsrichtung des Risses liegende Quadratur-Komponente des Magnetfeldes abgetastet und ausgewertet wird.

Vorzugsweise wird die Quadratur-Komponente des Magnetfeldes bei verschiedenen Frequenzen des magnetischen Wechselfeldes abgetastet und ausgewertet, wobei insbesondere die Frequenz des magnetischen Wechselfeldes einen vorgegebenen Frequenzbereich durchfährt, der von etwa 1 kHz bis zu etwa 1 MHz reicht.

Vorzugsweise wird zur Messung des Magnetfeldes ein auf der Basis des Hall-Effekts arbeitender Messkopf verwendet, wobei insbesondere der Messkopf eine Mehrzahl von in einem linearen Sensor-Array angeordneten Sensorelementen auf CMOS-Basis (CMOS: complementary metal-oxide-semiconductor) in Form von vertikalen Hall-Elementen umfasst. Zur Messung der in der Ebene der Oberfläche und quer zur Längsrichtung des Risses liegenden Quadratur-Komponente des Magnetfeldes wird dabei der lineare Sensor-Array quer zur Längsrichtung des Risses ausgerichtet.

Bevorzugt wird die maximale Stromschichtbreite mit einer Genauigkeit von 10 µm und die Risstiefe mit einer Auflösung von etwa 50 µm bestimmt.

Eine Ausgestaltung der erfindungsgemässen Messvorrichtung ist dadurch gekennzeichnet, dass die Magnetspule und der Messkopf in einer Abtastvorrichtung zusammengefasst sind, und dass die Abtastvorrichtung über die Oberfläche des Werkstücks verfahrbar ist, wobei vorzugsweise die Abtastvorrichtung mittels eines Roboters verfahrbar ist.

Die Magnetspule ist an einen Frequenzgenerator angeschlossen, der Frequenzen im Bereich zwischen etwa 1 kHz und etwa 1 MHz erzeugt. Der Messkopf umfasst einen linearen Sensor-Array mit nach dem Hall-Effekt arbeitenden Sensorelementen, und an eine Signalverarbeitungseinheit angeschlossen. Die Sensorelemente des linearen Sensor-Arrays sind dabei vorzugsweise auf CMOS-Basis in Form von vertikalen Hall-Elementen ausgebildet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer schematischen Darstellung die Ausgangssituation beim erfindungsgemässen Verfahren, bei der sich ein Riss mit einer Risstiefe von der Oberfläche in ein elektrisch leitendes Werkstück hinein erstreckt und bei Anlegen eines magnetischen Wechselfeldes Wirbelströme mit Stromschichten ausbildet;
- Fig. 2: die berechneten Kurven der Quadratur-Komponente des magnetischen Wechselfeldes in der Richtung quer zum Riss für verschiedene Frequenzen des magnetischen Wechselfeldes;
- Fig. 3: die berechnete Abhängigkeit der aus Fig. 2 bestimmten maximalen Stromschichtbreite an einem Riss von der Risstiefe;
- Fig. 4: eine beispielhafte Abtastvorrichtung zur Ermittlung der maximalen Stromschichtbreite an einem Riss;
- Fig. 4a: die Anordnung der VHD-Sensorelemente in einem linearen Array der Abtastvorrichtung gemäss einem Ausführungsbeispiel der Erfindung und
- Fig. 5: die mit einem Roboter ausgerüstete Messvorrichtung zur Bestimmung der Risstiefe gemäss einem Ausführungsbeispiel der Erfindung.

### WEGE ZUR AUSFÜHRUNG DER ERFINDUNG

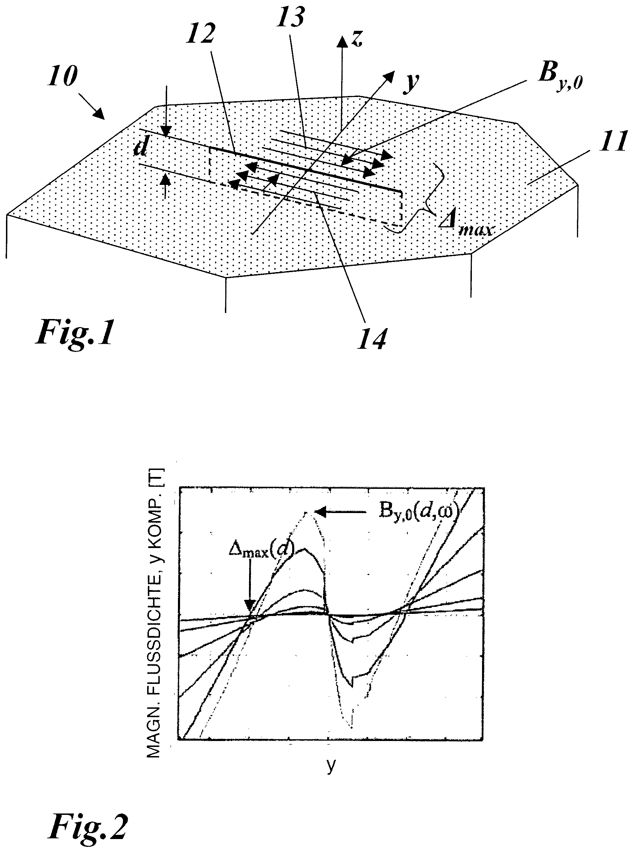

In Fig. 1 ist in einer schematischen Darstellung die typische Ausgangssituation beim erfindungsgemässen Verfahren wiedergegeben. Ein Werkstück 10 aus einem elektrisch leitenden Material, z.B. einem Metall, ist von einer Oberfläche 11 begrenzt, von der aus ein Riss 12 bis zu einer Risstiefe d in den Werkstückkörper hineinreicht. Der Riss 12 erstreckt sich in einer Längsrichtung (x-Richtung im Koordinatensystem der Fig. 1). Wird nun der Bereich des Werkstücks 10, welcher den Riss 12 enthält, mit einem magnetischen Wechselfeld beaufschlagt, werden in dem Werkstück 10 oberflächennahe Wirbelströme induziert, die ihrerseits ein Magnetfeld erzeugen. Im Bereich des Risses 12, der eine isolierende Barriere für die Wirbelströme darstellt, bilden sich Stromschichten 13, 14 aus, die sich am Verlauf des Risses 12 orientieren (die Breite der Stromschichten 13, 14 ist in Fig. 1 übertrieben dargestellt). Die (wechselnden) Stromschichten 13, 14 erzeugen ein (wechselndes) Magnetfeld, von dem vor allem die in der Ebene der Oberfläche 11 liegende Komponente B_{y,0} senkrecht zur Längsrichtung des Risses 12 eine Rolle spielt.

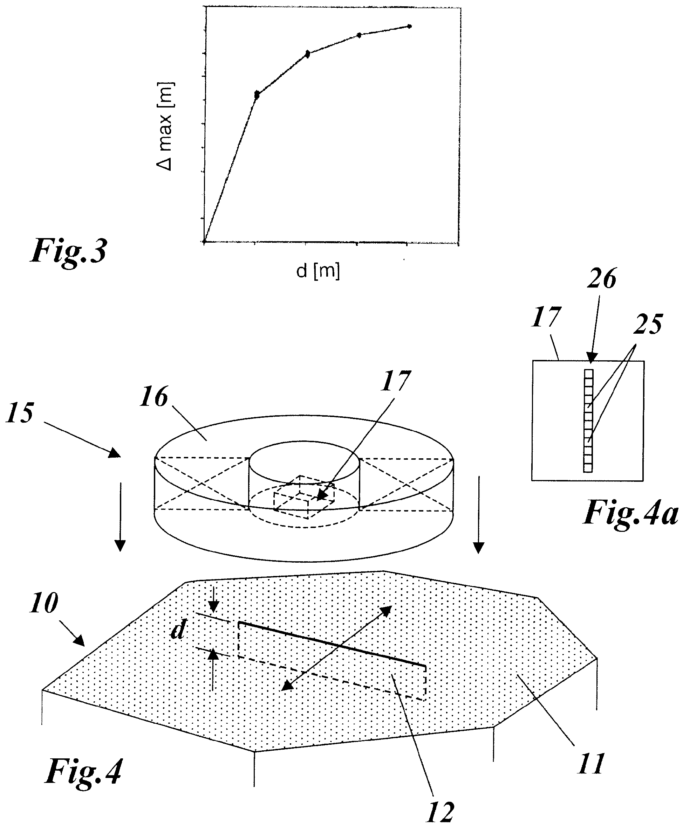

Betrachtet man die Abhängigkeit des Quadratur-Anteils B_{y,0}^{"}(y) dieser Komponente von der y-Ortskoordinate, ergibt sich der in Fig. 2 dargestellte Verlauf, der für verschiedene Frequenzen des anregenden Magnetfeldes (10 kHz, 30 kHz, 100 kHz, 300 kHz, 1 Mhz und 3 Mhz) unterschiedliche Kurven zeigt, die alle (vom Riss 12 bei y=0 aus gesehen) einen ersten Nulldurchgang haben, der als Breite Δ der Stromschichten 13, 14 interpretiert wird. Über den Frequenzbereich der Anregungsfrequenz gesehen, der von 1 kHz bis zu 1 Mhz reicht, geht diese Stromschichtbreite Δ durch ein Maximum Δₘₐₓ, die als maximale Stromschichtbreite ausschliesslich von der Risstiefe d abhängt, nicht jedoch von der elektrischen Leitfähigkeit und magnetischen Permeabilität des Materials, aus dem das Werkstück 10 besteht. Es ergibt sich dann für den allgemeinen Fall der in Fig. 3 wiedergegebene Zusammenhang zwischen Risstiefe d und der maximalen Stromschichtbreite Δₘₐₓ, der näherungsweise durch die Proportionalitätsrelation Δₘₐₓ∼d^{0,3} beschrieben werden kann. Diese Relation bildet die Basis des erfindungsgemässen Verfahrens, das aus einer Messung der maximalen Stromschichtbreite Δₘₐₓ die Risstiefe d des die Anomalie verursachenden Risses 12 bestimmt.

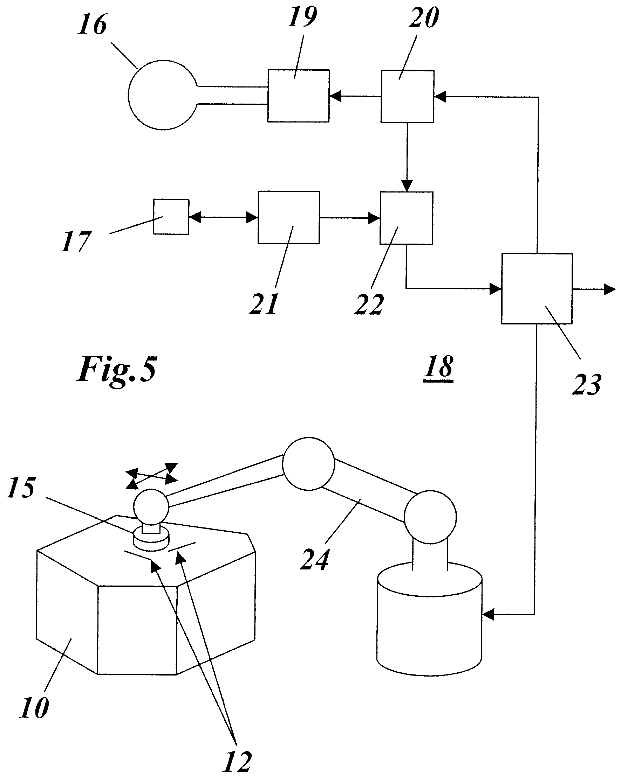

Wie in Fig. 4 und Fig. 5 dargestellt, umfasst die Messvorrichtung 18 zum Messen der Risstiefe eine Abtastvorrichtung 15 mit einer Magnetspule 16, die von einem Frequenzgenerator 20 über eine Treiberschaltung 19 mit einem einstell- und durchstimmbaren Wechselstrom im Frequenzbereich zwischen1 kHz und 10 MHz beaufschlagt wird. Die Magnetspule 16, die zur Bestimmung von Risstiefen von 1 mm oder weniger beispielsweise einen Aussendurchmesser von 4 mm und einen Innendurchmesser von 1,5 mm haben kann, erzeugt ein magnetisches Wechselfeld, das seinerseits im Werkstück 10 Wirbelströme erzeugt und mit dem das Werkstück 10 abgefragt wird. Innerhalb oder unterhalb der Magnetspule 16 ist ein Messkopf 17 angeordnet, der mit der Magnetspule 16 mitbewegt wird und die von den Wirbelströmen erzeugten Magnetfelder abtastet. Kernstück des Messkopfes 17 ist ein in Standard-CMOS-Technologie hergestellter Halbleiterchip, der einen linearen Sensor-Array 26 von VHD-Sensorelementen 25 enthält (Fig. 4a), die als vertikale Hall-Elemente (Vertical Hall Devices VHD) ausgebildet sind. Mit diesem Sensor-Array 26 können die lokalen Komponenten des magnetischen Feldes in und ausserhalb der Ebene der Oberfläche 11 gemessen werden. Der Messkopf 17 bzw. der Sensor-Array 26 sind dazu an eine Sensoransteuerungseinheit 21 angeschlossen, die den Sensor-Array 26 u.A. mit einer Vorspannung beaufschlagt und das VHD-Signal vorverstärkt. Eine nachgeschaltete Signalverarbeitungseinheit 22, die mit dem Frequenzgenerator 20 verbunden ist, demoduliert das Signal und filtert es. Eine Auswerteeinheit 23 steuert den Frequenzgenerator 20, wertet das Ausgangssignal der Signalverarbeitungseinheit 22 aus und steuert einen Roboter 24 (im Beispiel der Fig. 5 ein Roboterarm), der Die Abtastvorrichtung 15 mit der Magnetspule 16 und dem Messkopf 17 über die zu untersuchende Oberfläche 11 des Werkstücks 10 führt. Der Roboter 24 kann während der Messung die Abtastvorrichtung 15 verfahren und drehen.

Mit der in Fig. 5 gezeigten Messvorrichtung 18 kann das Verfahren wie folgt durchgeführt werden:
1. Risserkennung: Mit einer schnellen Messtechnik, die auf einer Veränderung der Impedanz bzw. des Widerstandes der Magnetspule 16 und/oder der Anwesenheit einer Spitze in der mit dem Messkopf 17 gemessenen, nicht in der Oberflächenebene liegenden Komponente des lokalen Magnetfeldes basiert, wird die Anwesenheit eines Risses erkannt, während sich der Roboter 24 mit einer Verfahrgeschwindigkeit von z.B. 1 cm/s bewegt.
2. Positionierung: Wird ein Riss entdeckt, stoppt der Roboter 24. Der Sensor-Array 26 wird dann senkrecht zur Längsrichtung des Risses positioniert.
3. Bestimmung der Risstiefe: In der eingestellten Position wird mittels Durchstimmen der Anregungsfrequenz der Magnetspule und Lokalisieren des Nulldurchgangs von B_{y,0}^{"}(y) die maximale Stromschichtbreite Δₘₐₓ gemessen und daraus mit Hilfe der Kurve aus Fig. 3 die Risstiefe d bestimmt.

Ein entscheidender Punkt des vorliegenden Verfahrens ist die Genauigkeit, mit welcher die Lage des Nulldurchgangs von B_{y,0}^{"}(y) auf der y-Achse bestimmt wird. Um eine Auflösung der Risstiefe d von 50 µm bei 1 mm, d.h. eine Auflösung von 5% zu erreichen, muss Δₘₐₓ mit einer Genauigkeit von 10 µm gemessen werden. Dies kann mit einem Sensor-Array 26 mit sehr dicht gepackten VHD-Sensorelementen 25 erreicht werden, wie sie an der EPFL Lausanne, Schweiz, entwickelt worden sind.

### BEZUGSZEICHENLISTE

- 10: Werkstück (metallisch)
- 11: Oberfläche (Werkstück)
- 12: Riss
- 13,14: Stromschicht
- 15: Abtastvorrichtung
- 16: Magnetspule
- 17: Messkopf
- 18: Messvorrichtung
- 19: Treiberschaltung
- 20: Frequenzgenerator
- 21: Sensoransteuerungseinheit
- 22: Signalverarbeitungseinheit
- 23: Auswerteeinheit
- 24: Roboter
- 25: VHD-Sensorelement
- 26: Sensor-Array
- B_{y,0}: Magnetfeld (parallel zur Oberfläche, senkrecht zum Riss)
- d: Risstiefe
- Δ: Stromschichtbreite
- Δₘₐₓ: maximale Stromschichtbreite

## Patentansprüche

1. Verfahren zum Bestimmen geometrischer Eigenschaften (d) einer die elektrische Leitfähigkeit verändernden Anomalie im oberflächennahen Bereich eines elektrisch leitenden, insbesondere metallischen Werkstücks (10), wobei im Bereich der Anomalie in dem Werkstück (10) Wirbelströme (13, 14) mit unterschiedlicher Frequenz angeregt werden, und das von den angeregten Wirbelströmen erzeugte Magnetfeld (B_{y,0}) in der Umgebung der Anomalie abgetastet und ausschliesslich aus der Verteilung des Magnetfeldes (B_{y,0}) auf die geometrischen Eigenschaften der Anomalie geschlossen wird, wobei die Anomalie ein Riss (12) ist und als geometrische Eigenschaft die Risstiefe (d) bestimmt wird, **dadurch gekennzeichnet, dass** ausgehend von dem Riss (12), der erste Nulldurchgang der in der Ebene der Oberfläche (11) und quer zur Längsrichtung des Risses (12) liegenden Quadratur-Komponente des Magnetfeldes (B_{y,0}) bestimmt und aus dem ersten Nulldurchgang die maximale Stromschichtbreite (Δₘₐₓ) der mit dem Riss (12) verknüpften Stromschichten (13, 14) der Wirbelströme ermittelt wird, und dass aus der ermittelten maximalen Stromschichtbreite (Δₘₐₓ) auf die Risstiefe (d) des zugehörigen Risses (12) geschlossen wird.

2. Verfahren nach Anspruch 1, **dadurch gekennzeichnet, dass** in einem ersten Schritt die Lage des Risses (12) auf der Oberfläche (11) des Werkstücks (10) bestimmt wird, und dass in einem zweiten Schritt die Verteilung des Magnetfeldes (B_{y,0}) quer zur Längsrichtung des Risses (12) abgetastet und ausgewertet wird.

3. Verfahren nach Anspruch 2, **dadurch gekennzeichnet, dass** die Wirbelströme (13, 14) im Bereich des Risses (12) durch Anlegen eines magnetischen Wechselfeldes angeregt werden, und dass die in der Ebene der Oberfläche (11) und quer zur Längsrichtung des Risses (12) liegende Quadratur-Komponente des Magnetfeldes (B_{y,0}) abgetastet und ausgewertet wird.

4. Verfahren nach Anspruch 3, **dadurch gekennzeichnet, dass** die Quadratur-Komponente des Magnetfeldes (B_{y,0}) bei verschiedenen Frequenzen des magnetischen Wechselfeldes (B_{y,0}) abgetastet und ausgewertet wird.

5. Verfahren nach Anspruch 4, **dadurch gekennzeichnet, dass** die Frequenz des magnetischen Wechselfeldes einen vorgegebenen Frequenzbereich durchfährt.

6. Verfahren nach Anspruch 5, **dadurch gekennzeichnet, dass** der vorgegebene Frequenzbereich von etwa 1 kHz bis zu etwa 1 MHz reicht.

7. Verfahren nach einem der Ansprüche 1 bis 6, **dadurch gekennzeichnet, dass** zur Messung des Magnetfeldes (B_{y,0}) ein auf der Basis des Hall-Effekts arbeitender Messkopf (17) verwendet wird.

8. Verfahren nach Anspruch 7, **dadurch gekennzeichnet, dass** der Messkopf (17) eine Mehrzahl von in einem linearen Sensor-Array (26) angeordneten Sensorelementen (25) auf CMOS-Basis in Form von vertikalen Hall-Elementen (VHD) umfasst.

9. Verfahren nach Anspruch 8, **dadurch gekennzeichnet, dass** zur Messung der in der Ebene der Oberfläche (11) und quer zur Längsrichtung des Risses (12) liegenden Quadratur-Komponente des Magnetfeldes (B_{y,0}) der lineare Sensor-Array (26) quer zur Längsrichtung des Risses (12) ausgerichtet wird.

10. Messvorrichtung (18) zur Durchführung des Verfahrens nach einem der Ansprüche 1 bis 9, umfassend erste Mittel (16, 19, 20) zur Erzeugung von Wirbelströmen einer vorgegebenen Frequenz im Werkstück (10) sowie zweite Mittel (17, 21, 22, 23, 25, 26) zur Messung des mit den Wirbelströmen verknüpften Magnetfeldes, wobei die ersten Mittel eine Magnetspule (16) umfassen, die zweiten Mittel einen an eine Signaleinrichtung (22) angeschlossenen Messkopf (17) umfassen, der innerhalb oder unterhalb der Magnetspule (16) angeordnet ist, die Magnetspule (16) an einen Frequenzgenerator (20) angeschlossen ist, der Frequenzgenerator Frequenzen im Bereich zwischen etwa 1 kHz und etwa 1 MHz erzeugt, der Messkopf (17) einen linearen Sensor-Array (26) mit nach dem Hall-Effekt arbeitenden Sensorelementen (25) umfasst, und die Sensorelemente (25) des linearen Sensor-Arrays (26) auf CMOS-Basis in Form von vertikalen Hall-Elementen (VHD) ausgebildet sind, **dadurch gekennzeichnet, dass** ausgehend von dem Riss (12), der erste Nulldurchgang der in der Ebene der Oberfläche (11) und quer zur Längsrichtung des Risses (12) liegenden Quadratur-Komponente des Magnetfeldes (B_{y,0}) bestimmt und aus dem ersten Nulldurchgang die maximale Stromschichtbreite (Δₘₐₓ) der mit dem Riss (12) verknüpften Stromschichten (13, 14) der Wirbelströme ermittelt wird, und dass aus der ermittelten maximalen Stromschichtbreite (Δₘₐₓ) auf die Risstiefe (d) des zugehörigen Risses (12) geschlossen wird.

11. Messvorrichtung nach Anspruch 10, **dadurch gekennzeichnet, dass** die Magnetspule (16) und der Messkopf (17) in einer Abtastvorrichtung (15) zusammengefasst sind, und dass die Abtastvorrichtung (15) über die Oberfläche (11) des Werkstücks (10) verfahrbar ist.

12. Messvorrichtung nach Anspruch11, **dadurch gekennzeichnet, dass** die Abtastvorrichtung (15) mittels eines Roboters (24) verfahrbar ist.

## Claims

1. Method for determining geometric characteristics (d) of an anomaly, which changes the electrical conductivity, in the region near the surface of an electrically conducting, in particular metallic workpiece (10), wherein in the region of the anomaly in the workpiece (10) eddy currents (13, 14) of different frequencies are excited, and the magnetic field (B_{y,0}), which is produced by the excited eddy currents, is scanned in the vicinity of the anomaly and the geometric characteristics of the anomaly are exclusively deduced from the distribution of the magnetic field (B_{y,0}), wherein the anomaly is a crack (12) and the crack depth (d) is determined as the geometric characteristic, **characterized in that**, starting from the crack (12), the first zero crossing of the quadrature component, which is located in the plane of the surface (11) and transversely with respect to the longitudinal direction of the crack (12), of the magnetic field (B_{y,0}) is determined and the maximum current layer width (Δₘₐₓ) of the current layers (13, 14), linked to the crack (12), of the eddy currents is ascertained from the first zero crossing, and **in that** the depth (d) of the associated crack (12) is deduced from the ascertained maximum current layer width (Δₘₐₓ).

2. Method according to Claim 1, **characterized in that** in a first step the position of the crack (12) on the surface (11) of the workpiece (10) is determined, and **in that** in a second step the distribution of the magnetic field (B_{y,0}) transversely with respect to the longitudinal direction of the crack (12) is scanned and evaluated.

3. Method according to Claim 2, **characterized in that** the eddy currents (13, 14) in the region of the crack (12) are excited by applying an alternating magnetic field, and **in that** the quadrature component, which is located in the plane of the surface (11) and transversely with respect to the longitudinal direction of the crack (12), of the magnetic field (B_{y,0}) is scanned and evaluated.

4. Method according to Claim 3, **characterized in that** the quadrature component of the magnetic field (B_{y,0}) is scanned at different frequencies of the alternating magnetic field (B_{y,0}) and evaluated.

5. Method according to Claim 4, **characterized in that** the frequency of the alternating magnetic field traverses a prespecified frequency range.

6. Method according to Claim 5, **characterized in that** the prespecified frequency range ranges from approximately 1 kHz to approximately 1 MHz.

7. Method according to one of Claims 1 to 6, **characterized in that** a measuring head (17) operating on the basis of the Hall effect is used to measure the magnetic field (B_{y,0}).

8. Method according to Claim 7, **characterized in that** the measuring head (17) comprises a plurality of sensor elements (25), which are arranged in a linear sensor array (26), on CMOS basis in the form of vertical Hall elements (VHD).

9. Method according to Claim 8, **characterized in that** the linear sensor array (26) is aligned transversely with respect to the longitudinal direction of the crack (12) in order to measure the quadrature component, which is located in the plane of the surface (11) and transversely with respect to the longitudinal direction of the crack (12), of the magnetic field (B_{y,0}).

10. Measuring apparatus (18) for carrying out the method according to one of Claims 1 to 9, comprising first means (16, 19, 20) for producing eddy currents of a prespecified frequency in the workpiece (10) and second means (17, 21, 22, 23, 25, 26) for measuring the magnetic field which is linked to the eddy currents, wherein the first means comprise a magnetic coil (16), the second means comprise a measuring head (17) which is connected to a signal device (22) and arranged inside or below the magnetic coil (16), the magnetic coil (16) is connected to a frequency generator (20), the frequency generator generates frequencies in the range between approximately 1 kHz and approximately 1 MHz, the measuring head (17) comprises a linear sensor array (26) with sensor elements (25) which operate according to the Hall effect, and the sensor elements (25) of the linear sensor array (26) are configured on CMOS basis in the form of vertical Hall elements (VHD), **characterized in that**, starting from the crack (12), the first zero crossing of the quadrature component, which is located in the plane of the surface (11) and transversely with respect to the longitudinal direction of the crack (12), of the magnetic field (B_{y,0}) is determined and the maximum current layer width (Δₘₐₓ) of the current layers (13, 14), linked to the crack (12), of the eddy currents is ascertained from the first zero crossing, and **in that** the depth (d) of the associated crack (12) is deduced from the ascertained maximum current layer width (Δₘₐₓ).

11. Measuring apparatus according to Claim 10, **characterized in that** the magnetic coil (16) and the measuring head (17) are combined in a scanning apparatus (15) and **in that** the scanning apparatus (15) can be moved over the surface (11) of the workpiece (10) .

12. Measuring apparatus according to Claim 11, **characterized in that** the scanning apparatus (15) can be moved using a robot (24).

## Revendications

1. Procédé destiné à déterminer des propriétés géométriques (d) d'une anomalie modifiant la conductibilité électrique dans la région proche de la surface d'une pièce d'oeuvre (10) conductrice d'électricité, notamment métallique, dans la région de l'anomalie, des courants de Foucault (13, 14) de différentes fréquences étant excités dans la pièce d'oeuvre (10) et le champ magnétique (B_{y,0}) créé par les courants de Foucault excités étant balayé dans l'environnement de l'anomalie et les propriétés géométriques de l'anomalie étant déduites exclusivement de la distribution du champ magnétique (B_{y,0}), l'anomalie étant une fissure (12) et la profondeur de fissure (d) étant déduite en tant qu'anomalie, **caractérisé en ce que** sur la base de la fissure (12), on détermine le premier passage par zéro du composant de la quadrature du champ magnétique (B_{y,0}) situé dans le plan de la surface (11) et à la transversale de la direction longitudinale de la fissure (12) et on déduit du premier passage par zéro la largeur maximale (Δₘₐₓ) de couche de courant des couches de courant (13, 14) des courants de Foucault associés à la fissure (12) et **en ce qu'**à partir de la largeur maximale (Δₘₐₓ) de couche de courant déterminée, on déduit la profondeur de fissure (d) de la fissure (12) correspondante.

2. Procédé selon la revendication 1, **caractérisé en ce que** dans une première étape, on détermine la position de la fissure (12) sur la surface (11) de la pièce à usiner (10) et **en ce que** dans une deuxième étape, on balaye et on évalue la distribution du champ magnétique (B_{y,0}) à la transversale de la direction longitudinale de la fissure (12).

3. Procédé selon la revendication 2, **caractérisé en ce qu'**on excite les courants de Foucault (13, 14) dans la région de la fissure (12) par application d'un champ magnétique alterné et **en ce qu'**on balaye et on évalue le composant de la quadrature du champ magnétique (B_{y,0}) situé dans le plan de la surface (11) et à la transversale de la fissure (12) .

4. Procédé selon la revendication 3, **caractérisé en ce qu'**on balaye et on évalue le composant de la quadrature du champ magnétique (B_{y,0}) à différentes fréquences du champ magnétique (B_{y,0}) alterné.

5. Procédé selon la revendication 4, **caractérisé en ce que** la fréquence du champ magnétique alterné traverse une gamme de fréquences prédéfinie.

6. Procédé selon la revendication 5, **caractérisé en ce que** la gamme de fréquences prédéfinie s'étend d'environ 1 kHz à environ 1 MHz.

7. Procédé selon l'une quelconque des revendications 1 à 6, **caractérisé en ce que** pour mesurer le champ magnétique (B_{y,0}), on utilise une tête de mesure (17) fonctionnant sur la base de l'effet de Hall.

8. Procédé selon la revendication 7, **caractérisé en ce que** la tête de mesure (17) comprend une pluralité d'éléments capteurs (25) sur base CMOS, placés dans un ensemble de capteurs (26) linéaire, sous la forme d'éléments verticaux (VHD).

9. Procédé selon la revendication 8, **caractérisé en ce que** pour mesurer le composant de la quadrature du champ magnétique (B_{y,0}) situé dans le plan de la surface (11) et à la transversale de la direction longitudinale de la fissure (12), on oriente l'ensemble de capteurs (26) linéaire à la transversale de la direction longitudinale de la fissure (12).

10. Dispositif de mesure (18) destiné à réaliser le procédé selon l'une quelconque des revendications 1 à 9, comprenant des premiers moyens (16, 19, 20) pour créer des courants de Foucault d'une fréquence prédéfinie dans la pièce d'oeuvre (10), ainsi que des deuxièmes moyens (17, 21, 22, 23, 25, 26) pour mesurer le champ magnétique associé aux courants de Foucault, les premiers moyens comprenant une bobine magnétique (16), les deuxièmes moyens comprenant une tête de mesure (17) raccordée sur un système de signalisation (22) qui est placée à l'intérieur ou en-dessous de la bobine magnétique (16), la bobine magnétique (16) étant raccordée sur un générateur de fréquences (20), le générateur de fréquences créant des fréquences dans la gamme comprise entre environ 1 kHz et environ 1 MHz, la tête de mesure (17) comprenant un ensemble de capteurs (26) linéaire avec des éléments capteurs (25) fonctionnant selon l'effet de Hall et les éléments capteurs (25) de l'ensemble de capteurs (26) linéaire étant conçus sur la base CMOS, sous la forme d'éléments de Hall (VHD) verticaux, **caractérisé en ce qu'**à partir de la fissure (12), on détermine le premier passage par zéro du composant de la quadrature du champ magnétique (B_{y,0}) situé dans le plan de la surface (11) et à la transversale de la direction longitudinale de la fissure (12) et à partir du premier passage par zéro, on détermine la largeur maximale (Δₘₐₓ) de couche de courant des couches de courant (13, 14) des courants de Foucault associés à la fissure (12) et **en ce qu'**à partir de la largeur maximale (Δₘₐₓ) de couche de courant déterminée, on déduit la profondeur de fissure (d) de la fissure (12) correspondante.

11. Dispositif de mesure selon la revendication 10, **caractérisé en ce que** la bobine magnétique (16) et la tête de mesure (17) sont rassemblées dans un dispositif de balayage (15) et **en ce que** le dispositif de balayage (15) est déplaçable pardessus la surface (11) de la pièce d'oeuvre (10).

12. Dispositif selon la revendication 11, **caractérisé en ce que** le dispositif de balayage (15) est déplaçable au moyen d'un robot (24).
